# EUROPÄISCHE PATENTANMELDUNG

(11) **EP 1 072 478 A2**
(43) Veröffentlichungstag der Anmeldung: **31.01.2001**
(21) Anmeldenummer: 00115089.5
(22) Anmeldetag: 27.07.2000
(51) Int. Cl.: B60R 21/16

(54) **Gassack und Verfahren zu seiner Herstellung**

(30) Priorität: 30.07.1999 DE 19935932
(71) Anmelder: TRW Occupant Restraint Systems GmbH & Co. KG, 73553 Alfdorf (DE)
(72) Erfinder: Ritter, Philipp, 55578 Wallertheim (DE)
(74) Vertreter: Kitzhofer, Thomas, Dipl.-Ing.

(57) **Zusammenfassung**

Ein Gassack hat eine Gassackwand aus zwei Gewebelagen, die um die aufblasbaren Kammern (19) herum miteinander verwoben sind. In sogenannten Fixierabschnitten (25), die insbesondere der Abspannung des Gassacks dienen können, ist die Gassackwand jedoch nur einlagig ausgeführt.

## Beschreibung

Die Erfindung betrifft einen Gassack, insbesondere einen Kopf-Seitengassack, mit wenigstens einer aufblasbaren Kammer und zwei die Gassackwand bildenden Gewebelagen, die die Kammer begrenzen und entlang eines Randes der Kammer miteinander verwoben sind, und mit wenigstens einem an den Rand angrenzenden Fixierabschnitt, der durch wenigstens einen nicht aufblasbaren Abschnitt der Gassackwand gebildet ist.

Insbesondere bei Kopf-Seitengassäcken, die wenigstens eine Seitenscheibe eines Fahrzeugs teilweise abdecken und bei einem Seitenaufprall Schutz bieten sollen, sind die Fixierabschnitte dazu da, einerseits den Gassack längs seines Umfangsrandes am Fahrzeug zu arretieren und andererseits, um zusätzliche, nicht aufblasbare Rückhaltebereiche zu bilden. Beispielsweise sind diese zusätzlichen Rückhaltebereiche zwischen der A-Säule und der nahe der B-Säule angeordneten aufblasbaren Kammer vorgesehen. Die Wahrscheinlichkeit, daß der Kopf des Insassen in diesen nicht aufblasbaren Bereichen auf die Seitenscheibe trifft, ist nur bei seltenen Konstellationen möglich. Für diese Fälle bieten diese Bereiche aber einen brauchbaren Schutz. Im übrigen reduzieren sie aber das Aufblasvolumen des Gassacks, da aufblasbare Kammern nur in den Bereichen unmittelbar seitlich des Kopfes des zu schützenden Insassen vorgesehen sind. Bei großflächigen Kopf-Seitengassäcken, auch Windowbags genannt, werden zwei Gewebelagen in den Bereichen, die nicht aufblasbar sein sollen, miteinander vollflächig verwoben. Diese Verbindung ist kostengünstig herzustellen und extrem stabil.

Die Erfindung schafft einen Gassack, insbesondere einen Kopf-Seitengassack, der sich durch ein geringeres Packvolumen als die bislang bekannten auszeichnet. Dies wird bei einem Gassack der eingangs genannten Art dadurch erreicht, daß der Fixierabschnitt durch eine einfache Gewebelage gebildet wird.

Vorzugsweise endet diejenige Gewebelage, die nicht den Fixierabschnitt bildet, mit dem Rand der aufblasbaren Kammer. Die einfache Gewebelage sorgt für ein geringeres Packvolumen und auch für ein geringeres Gewicht des Gassacks.

Vorzugsweise ist wenigstens die den Fixierabschnitt bildende Gewebelage nur auf einer Seite beschichtet, was Kostenvorteile aber auch Funktionsvorteile mit sich bringt. Es gibt mehrere Arten von Beschichtung. Zum einen kann eine Beschichtung vorgesehen sein, die den Gassack gasdicht macht, zum anderen kann eine Beschichtung vorhanden sein, die die Reibung verringern soll. Dadurch soll der Entfaltungsprozeß leichter vonstatten gehen. Wie es sich herausgestellt hat, ist die Reibung beim Entfalten des Gassacks geringer, wenn der Gassack nur auf einer Seite beschichtet ist.

Vorzugsweise sind mehrere Fixierabschnitte vorgesehen, nämlich Fixierabschnitte, die im entfalteten und eingebauten Zustand des Gassacks oberhalb der Kammer liegen und, bei einem Seitengassack, die Verbindung zum Dachrahmen bilden. Darüber hinaus sind Fixierabschnitte vorgesehen, die sich zwischen den aufblasbaren Kammern und den Fahrzeugsäulen (A-, B- oder C-Säule) erstrecken. Über die Fixierabschnitte kann auch ein Verspannen des Gassacks zwischen seinen Verankerungsstellen ermöglicht werden.

Vorteilhafterweise sind auch mehrere aneinander angrenzende Kammern vorgesehen, zwischen denen die beiden Gewebelagen unmittelbar miteinander verwoben sind.

Der Umfangsrand des Gassacks nach vollendeter Herstellung ist gemäß der bevorzugten Ausführungsform wenigstens abschnittsweise durch zwei miteinander verwobene Gewebelagen gebildet. Damit soll im Bereich der Befestigungsstellen ein Ausreißen des Gassacks verhindert werden.

Die Erfindung betrifft darüber hinaus ein Verfahren zum Herstellen des erfindungsgemäßen Gassacks. Das Verfahren sieht vor, um die aufblasbaren Kammern herum die beiden Gewebelagen unter Bildung des Randes der Kammer miteinander zu verweben. Nach dem Rand der Kammern, d.h. auf Seiten des späteren Fixierabschnitts und außerhalb der Kammern sind zwar nach wie vor zwei Gewebelagen vorgesehen, diese sind jedoch nicht mehr miteinander verwoben. Erst am Außenrand des ausgebreiteten, noch nicht vollständig hergestellten Gassacks (also des Gassacks in einem unvollendeten Zustand) gehen die beiden Gewebelagen ineinander über. Anschließend wird eine der beiden Gewebelagen außerhalb der Kammer aufgeschnitten und längs des Außenrands nach außen geklappt, um den einlagigen Fixierabschnitt zu bilden. Der Fixierabschnitt wird somit aus beiden ineinander übergehenden aufgeklappten Gewebelagen gebildet. Die Webgeometrie entspricht damit nicht der entfalteten Gassackform, denn erst durch das Aufschneiden und Umklappen, d.h. Auffalten der Gewebelagen wird der Fixierabschnitt komplett gebildet. Auch bei der Herstellung des Gassacks ist damit eine geringere Menge an Gewebematerial notwendig.

Vorzugsweise wird der Gassack vor dem Aufschneiden nahe des Randes der Kammer außenseitig beschichtet. Damit kommt kein Beschichtungsmaterial auf diejenigen Seiten der Gewebelagen, die vor dem Aufschneiden noch unmittelbar aufeinanderliegen. Es wird dadurch weniger Beschichtungsmaterial aufgetragen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Seitenansicht eines erfindungsgemäßen ABC-Gassacks im entfalteten und eingebauten Zustand und
Figuren 2 und 3 Teile des Gassacks nach Figur 1, die aufeinanderfolgende Schritte beim Herstellen des Gassacks zeigen.

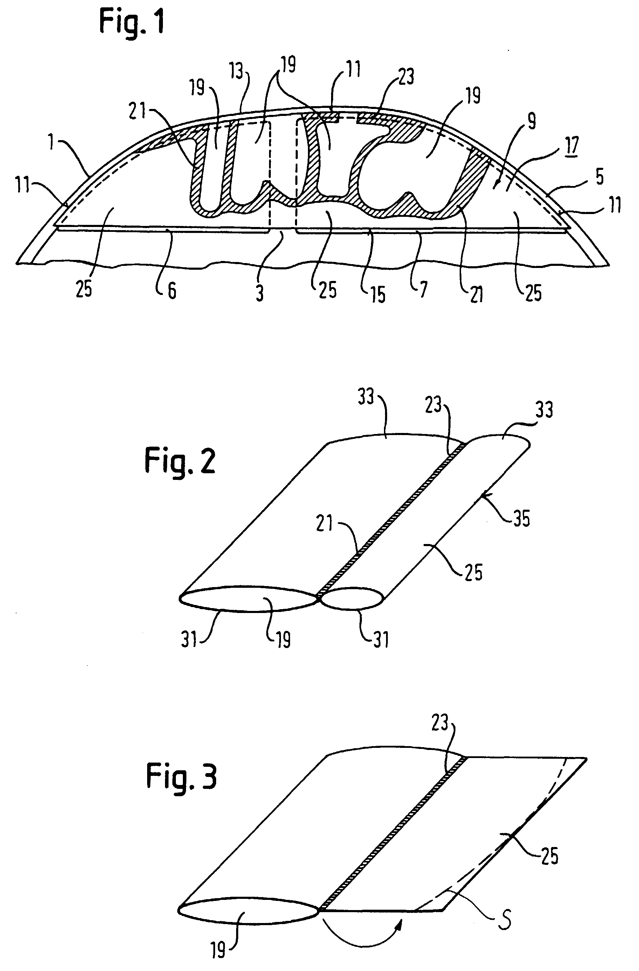

In Figur 1 ist ein sogenannter ABC-Gassack dargestellt, der sich von der A-Säule 1 über die B-Säule 3 bis zur C-Säule 5 eines Fahrzeugs erstreckt. In dem in Figur 1 dargestellten aufgeblasenen Zustand deckt er die Seitenscheiben 6, 7 fast vollständig ab. Der Gassack, der das Bezugszeichen 9 trägt, hat einen Umfangsrand mit einem oberen Abschnitt 11, der längs der A-Säule 1, des Dachrahmens 13 und schließlich längs der C-Säule 5 verläuft. Längs dieses Umfangsrandes ist er an der A-Säule 1, dem Dachrahmen 13 und der B-Säule 5 befestigt. Der Umfangsrand des Gassacks hat schließlich noch einen längs der Unterseite der Seitenscheiben 6, 7 verlaufenden Abschnitt 15.

Der Gassack besteht aus einer Gassackwand 17 aus dichtem Gewebematerial. Es sind mehrere Kammern 19 vorgesehen, welche aufblasbar ausgebildet sind und in aufgeblasenem Zustand unmittelbar seitlich des Kopfes der Insassen liegen. Die Kammern werden durch zwei Gewebelagen begrenzt, die längs des Randes 21 der Kammern miteinander verwoben sind. Die Abschnitte, in denen die beiden Gewebelagen miteinander verwoben sind, sind zur Verdeutlichung in Figur 1 schraffiert dargestellt und mit dem Bezugszeichen 23 versehen. Im Bereich des Dachrahmens 13 sind parallel zu diesem verlaufende Abschnitte von miteinander verwobenen Gewebelagen vorgesehen, die nicht unmittelbar den Rand der Kammern 19 bilden. Diese Abschnitte sollen dazu dienen, ein Ausreißen der Gassackwand an den Befestigungsstellen zu verhindern. Ferner sind die beiden vorderen Kammern 19 durch einen gemeinsamen Rand 21 voneinander abgegrenzt, in dem die Gewebelagen 31, 33 miteinander verwoben sind. Neben den aufblasbaren, d.h. außerhalb der Kammern und den miteinander verwobenen Abschnitten 23 weist der Gassack 9 noch sogenannte Fixierabschnitte 25 auf, die großflächig ausgebildet sind, die Kammern 19 zum Teil miteinander verbinden und der Lagefixierung der Kammern 19 dienen. Darüber hinaus bilden die Fixierabschnitte 25 zusätzliche Rückhalteflächen, die z.B. bei einem Fahrzeugüberschlag den Kopf oder die Arme des Insassen im Fahrzeug halten soll.

Im Bereich der Fixierabschnitte 25 ist die Gassackwand nur durch eine Gewebelage gebildet, so daß das Packvolumen und das Gewicht des Gassacks 9 gering gehalten werden.

Der Gassack 9 ist zudem im Bereich der Kammern 19 und der verwobenen Bereiche 23 auf beiden Außenseiten mit einer Beschichtung versehen, die das Gewebe gasdicht macht und die zudem reibungsverringernd ist. Im Bereich der Fixierabschnitte 25 hingegen ist nur auf der den Seitenscheiben zugewandten Außenseite eine entsprechende Beschichtung vorgesehen.

Die Herstellung des in Figur 1 dargestellten, in einem Stück gewebten Gassacks erfolgt dadurch, daß zwei Gewebelagen in dem mit 23 gekennzeichneten Bereich miteinander verwoben werden.

Figur 2 zeigt einen Ausschnitt des Gassacks 9, in dem die Gewebelagen 31 und 33 gut zu erkennen sind. An den Rand 21 und den verwobenen Bereich 23 schließt sich der später einlagige Fixierabschnitt 25 an. Bei dem in Figur 2 dargestellten Stadium der Herstellung des Gassacks hat der Fixierabschnitt 25, d.h. die Gewebebereiche, die später den Fixierabschnitt bilden, jedoch noch nicht seine endgültige Form, vielmehr ist hier ein Zwischenstadium während seiner Herstellung gezeigt. Außerhalb des Randes 21, im späteren Fixierabschnitt, hat der Gassack nach wie vor zwei Gewebelagen 31, 33, die aber nicht miteinander verwoben sind. Nur am (vorübergehend vorhandenen) Außenrand 35 des Gassacks gehen die Gewebelagen 31, 33 ineinander über. Der spätere Fixierabschnitt 25 ist zu diesem Zeitpunkt der Herstellung noch durch eine Art Tasche oder Kammer gebildet.

In diesem Zustand wird der Gassack außenseitig vollständig beschichtet.

Anschließend wird die untere Gewebelage 31 nahe des verwobenen Randes 21 aufgeschnitten und in Pfeilrichtung (vgl. Figur 3) nach außen gezogen, so daß der Fixierabschnitt 25 nur noch aus einer Gewebelage gebildet ist, die sich sozusagen aus den Gewebelagen 31 und 33 zusammensetzt. Die mit S bezeichnete Schnittlinie stellt eine von vielen Möglichkeiten dar, den aufgeklappten Fixierabschnitt 25 zurechtzuschneiden. Die gewählte Schnittlinie S hat jedoch nur Beispielcharakter; es soll lediglich deutlich gemacht werden, daß der Führungsabschnitt 25 nicht rechteckig bleiben muß, sondern auf beliebige, zweckdienliche Art beschnitten werden kann. Die Beschichtung ist, bezogen auf Figur 3, nur auf der zu sehenden Oberseite vorhanden. Anschließend wird der Gassack außenseitig beschnitten, so daß sich ein definierter Umfangsrand ergibt, wie er in Figur 1 auch dargestellt ist.

Die durch Aufklappen gebildeten Fixierabschnitte 25 können an mehreren Stellen des Gassacks vorgesehen sein, oberhalb, unterhalb oder seitlich der Kammern. Die Fixierabschnitte 25 müssen darüber hinaus nicht ausschließlich durch Aufschneiden einer Gewebelage und Umklappen derselben gebildet sein.

Ferner können auch nur einige Bereiche der Fixierabschnitte 25 durch das dargestellte Verfahren hergestellt werden und andere dadurch, daß eine Gewebelage vollständig vom Gassack abgetrennt wird und nur noch die verbleibende Gewebelage den Fixierabschnitt bildet.

## Patentansprüche

1. Gassack, mit
wenigstens einer aufblasbaren Kammer (19) und
zwei die Gassackwand bildenden Gewebelagen (31, 33),
die die Kammer (19) begrenzen und entlang eines Randes (21) der Kammer (19) miteinander verwoben sind, und
mit wenigstens einem an den Rand (21) angrenzenden Fixierabschnitt (25), der durch wenigstens einen nicht aufblasbaren Abschnitt der Gassackwand (17) gebildet ist,
dadurch gekennzeichnet, daß
der Fixierabschnitt (25) durch nur eine Gewebelage (31, 33) gebildet ist.

2. Gassack nach Anspruch 1, dadurch gekennzeichnet, daß mindestens eine der beiden Gewebelagen mit dem Rand (21), der die aufblasbare Kammer (19) begrenzt, endet.

3. Gassack nach Anspruch 2, dadurch gekennzeichnet, daß die den Fixierabschnitt (25) bildende Gewebelage in eine der beiden die Kammer begrenzende Gewebelage (31, 33) übergeht.

4. Gassack nach einem der Ansprüche 1 bis 3, dadurch gekennzeichnet, daß er als großflächiger, wenigstens eine Seitenscheibe (5, 7) eines Fahrzeugs teilweise abdeckender Kopf-Seitengassack ist.

5. Gassack nach Anspruch 4, dadurch gekennzeichnet, daß die Kammer (19) im aufgeblasenen Zustand seitlich des Kopfes des zu schützenden Insassen angeordnet ist und der Fixierabschnitt (25) eine Verbindung der Kammer (19) mit dem Dachrahmen (13) oder einer Fahrzeugsäule (1, 3, 5) bildet.

6. Gassack nach einem der vorhergehenden Ansprüche, dadurch gekennzeichnet, daß sich der Fixierabschnitt (25) in eingebautem, aufgeblasenen Zustand des Gassacks oberhalb, unterhalb und/oder seitlich der Kammer (19) erstreckt.

7. Gassack nach einem der vorhergehenden Ansprüche, dadurch gekennzeichnet, daß mehrere aneinander angrenzende Kammern (19) vorgesehen sind, wobei unmittelbar zwischen benachbarten Kammern (19) eine doppelte Gewebelage die Gassackwand (17) bildet und die entsprechenden Gewebelagen (31, 33) in diesem Bereich miteinander verwoben sind.

8. Gassack nach einem der vorhergehenden Ansprüche, dadurch gekennzeichnet, daß er im vollständig hergestellten Zustand einen Umfangsrand (11, 15) hat, an dem die Gewebelagen (31, 33) wenigstens abschnittsweise miteinander verwoben sind.

9. Verfahren zum Herstellen eines Gassacks nach einem der vorhergehenden Ansprüche, dadurch gekennzeichnet,
daß die beiden Gewebelagen (31, 33) unter Bildung des Randes (21) der Kammer (19) miteinander verwoben werden,
daß sich die beiden Gewebelagen (31, 33) über den Rand (21) der Kammer (19) hinaus zur späteren Bildung des Fixierabschnitts (25) erstrecken, wo sie nicht mehr miteinander verwoben, sondern erst am Außenrand (35) des ausgebreiteten, noch nicht vollständig hergestellten Gassacks ineinander übergehen, und
daß eine der beiden Gewebelagen (31, 33) außerhalb der Kammer (19) durchgeschnitten und längs des Umfangsrandes nach außen geklappt wird, um den einlagigen Fixierabschnitt (25) zu bilden.

10. Verfahren nach Anspruch 9, dadurch gekennzeichnet, daß der Gassack (9) vor dem Aufschneiden außenseitig beschichtet wird.

11. Verfahren nach Anspruch 9 oder 10, dadurch gekennzeichnet, daß der Gassack (9) nach dem Aufklappen außenseitig beschnitten wird.

12. Verfahren nach einem der Ansprüche 9 bis 11, dadurch gekennzeichnet, daß eine Gewebelage unmittelbar an dem eine Kammer (19) begrenzenden Rand (21) aufgeschnitten wird.

13. Verfahren nach einem der Ansprüche 9 bis 12, dadurch gekennzeichnet, daß der Gassack außenseitig nach dem Aufschneiden und Nachaußenklappen des Fixierabschnitts (25) umfangsseitig beschnitten wird.
